# EUROPEAN PATENT SPECIFICATION

(11) **EP 1 698 790 B1**
(45) Date of publication and mention of the grant of the patent: **28.12.2011**
(21) Application number: 06004155.5
(22) Date of filing: 01.03.2006
(51) Int. Cl.: F16C 33/64, F16C 33/78

(54) **Sealed rolling bearing**
Wälzlager mit einer Dichtung
Palier de roulement avec une garniture d'étancheité

(30) Priority: 01.03.2005 JP 2005056298; 04.04.2005 JP 2005107090; 05.04.2005 JP 2005108589; 01.06.2005 JP 2005161743; 23.01.2006 JP 2006013842; 21.07.2005 JP 2005211610; 23.01.2006 JP 2006013871
(43) Date of publication of application: 06.09.2006
(60) Divisional application: 10014468.2
(73) Proprietor: NTN Corporation, Osaka-shi, Osaka (JP)
(72) Inventor: Goto, Tomoaki, Iwata-chi Shizuoka (JP); Muramatsu, Makoto, Iwata-chi Shizuoka (JP); Yoshioka, Shinichi, Iwata-chi Shizuoka (JP); Fujiniwa, Ikuo, Iwata-chi Shizuoka (JP)
(74) Representative: Grünecker, Kinkeldey, Stockmair & Schwanhäusser

(56) References cited:
- JP-A- 2003 184 897
- US-A- 5 860 748
- US-A1- 2004 188 951

## Description

### BACKGROUND OF THE INVENTION

The present invention relates to a sealed rolling bearing including contact seals sealing its bearing space defined between the inner and outer rings thereof.

A sealed rolling bearing according to the preamble of claim 1 is known from US 2004/188951 A1.

US 5,860,748 A discloses a sealed rolling bearing comprising an inner ring and an outer ring sandwiching a plurality of rolling elements. The inner ring comprises a seal groove in a radially outer periphery thereof, wherein said seal groove has an axially inner wall and an axially outer wall connected with each other by a bottom. Further, a contact seal is provided, which contact seal is fixed to the outer ring and has a seal lip made of an elastic material and having a free end thereof kept in sliding contact with said axially inner wall. Said free end is kept in sliding contact with said axially inner wall along a line, which is located radially inwardly of a radially outer edge of the axially outer wall and near the bottom.

In sealed rolling bearings, it is necessary to seal their bearing space defined between the inner and outer rings high seal performance to prevent leakage of grease from the bearing space and entry of foreign matter such as water and dust from outside. Therefore, sealed rolling bearings are used which have their bearing space sealed by contact seals having seal lips made of an elastic material and in sliding contact with the sliding contact surfaces formed on one of the inner and outer rings (as disclosed in Japanese utility model publication 7-10556 (Patent publication 1) in Figs. 1, 2).

Among such sealed rolling bearings, ones for use in pulleys for vehicle accessories and electromagnetic clutches for compressors of air-conditioners often have their contact seals secured to the outer ring and have the seal lips of the contact seals in sliding contact with axially inner walls of seal grooves formed in the outer periphery of the inner ring to seal the bearing space defined between the inner and outer rings (see e.g. Patent publication 2: Japanese patent publication 2003-35319A (Fig. 1); Patent publication 3: Japanese patent 3062673 (Figs. 1 and 2); and Patent publication 4: Japanese patent publication 2001-140907A (Figs. 1-4)). Usually, the axially outer wall opposite to the inner wall of each seal groove is made to have a radial height lower than the radial height of the axially inner wall for easy mounting of the contact seals into the bearing.

The sealed rolling bearing disclosed in Patent publication 2 has a tip of the seal lip in sliding contact with a straight portion of the inner wall of the seal groove for stable contact. Specifically, the distance L from the outer end of a rounded portion extending from the bottom of the seal groove to the axially inner wall to the contact point is set to 0.35 mm < L < 3 mm.

The sealed rolling bearing disclosed in Patent publication 3 has a seal lip extending beyond the metallic core and its axial thickness B is set to 0.2 mm to 0.4 mm. Also, the ratio of the radial length A of the seal lip to its axial thickness B is set to 4.5 ≤ A/B ≤ 7. Further, it proposes to adjust the rigidity of the seal lip to a suitable level, thus improving the followability of the seal lip on the sliding contact surface and ensuring stable contact of the seal lip.

The sealed rolling bearing disclosed in Patent publication 4 has a seal lip which is in sliding contact with the axially inner wall of the seal groove and has a radially outer inclined surface inclined radially outwardly from its tip, and a radially inner inclined surface inclined toward the bottom of the seal groove from its tip. Also, the angle α between the axially inner wall of the seal groove and the radially outer inclined surface is set to 10 to 45 degrees and the angle y between the bottom of the seal groove and the radially inner inclined surface is set to 0 to 30 degrees to suppress elastic deformation of the seal lip by grease pushed out of the bearing space into the seal groove, and to prevent entry of foreign matter from the bottom of the seal groove into the bearing space. Also, the ratio of the force P for pressing the seal lip against the sliding contact surface to the axial interference L of the seal lip is set to 2.9 to 9.8 N/mm and the interference L is set to 1 to 3% of the diameter of the balls as the rolling elements, thereby suppressing the elastic deformation of the elastic member resulting in the decrease of the seal performance and ensuring the seal performance.

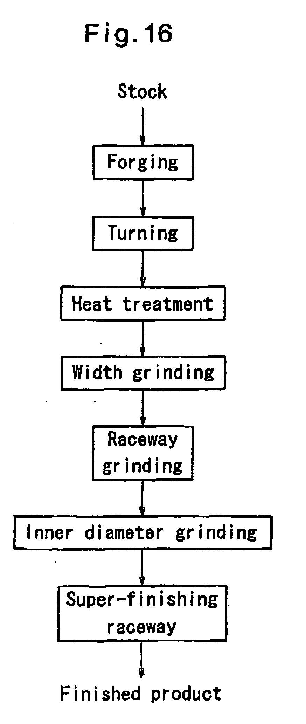

Including the above-mentioned sealed type, the bearing rings of rolling bearings such as inner and outer rings are manufactured following the steps shown in Fig. 16. That is, while the raceways on which rolling elements roll are subjected to turning and super-finishing after heat treatment such as hardening, sliding contact surfaces with which the seal lips are brought in sliding contact are formed by turning not after but before heat treatment. After heat treatment, the sliding contact surfaces are not subjected to any kind of treatment.

The sealed rolling bearing disclosed in Patent publication 2 has the seal lip of each contact seal kept in contact with the axially inner wall of the seal groove in a stable state under a calm environment where nothing scatters. But when used in an environment where the bearing is exposed to scattered water and mud, such scattered water and mud may directly hit the tip of the seal lip because, as mentioned above, the axially outer wall of the seal groove has a radial height lower than the axially inner wall. Therefore, the contact of the tip of the seal lip with the axially inner wall of the seal groove becomes unstable, thus lowering the seal performance of the contact seals.

With sealed rolling bearings having seal lips of a size set to provide proper rigidity, e.g. the one disclosed in Patent publication 3, the interference of the seal lip is not specified either directly or indirectly. Therefore, seal performance cannot be ensured reliably. Also, the shape of the seal lip cannot be defined because the axial thickness B is not uniform, like the one disclosed in Patent publication 4.

The sealed rolling bearing disclosed in Patent publication 4 prevents entry of foreign matter from the seal grooves by regulating the angle y between the radially inner inclined surface and the bottom of the seal groove to 0 to 30 degrees. But in order to prevent entry of foreign matter from the seal grooves, it is important that the angle of the axially inner wall of the seal groove relative to the radially inner inclined surface be large. Even if the angle of the radially inner inclined surface relative to the bottom of the seal groove is regulated, expected seal effect cannot be always obtained. Also, with sealed rolling bearings in which the ratio of the seal lip pressing force P to the axial interference L and the axial interference L are specified, if the interference L is changed, the pressing force P, too, will change. Therefore, the control of the interference L and the ratio P/L within the specified ranges is troublesome. Also, if the interference L is near its lower limit, the ratio P/L will be within a specified range even with a small pressing force P. This makes it impossible to ensure the seal performance. Further, because the interference L is specified relative to the diameter of the balls, this method is applicable only to ball bearings. Thus, this arrangement is not versatile.

Therefore, an object of the present invention is to ensure the seal performance of a sealed rolling bearing even if used in an environment where the bearing is exposed to water and mud, by stably keeping the tip of the seal lip of each contact seal in contact with a sliding contact surface such as an axially inner wall of a seal groove, and to ensure the seal performance with simple and versatile regulations.

### SUMMARY OF THE INVENTION

According to the present invention, there is provided a sealed rolling bearing comprising an inner ring formed with two seal grooves in a radially outer periphery thereof, each of the two seal grooves having an axially inner wall and an axially outer wall, an outer ring, a plurality of rolling elements disposed in a bearing space defined between the inner and outer rings, and contact seals fixed to the outer ring and each having a seal lip made of an elastic material and having a free end thereof kept in sliding contact with the axially inner wall of one of the seal grooves, thereby sealing the bearing space, characterized in that the seal lip of each of the contact seals has the free end thereof kept in sliding contact with the axially inner wall along a line that is located radially inwardly of a radially outer edge of the axially outer wall by 0.05 to 0.1 mm.

By bringing the free end of the seal lip of each contact seal into contact with the radially inner wall of the seal groove along a line located radially inwardly of the radially outer edge of the axially outer wall of the seal groove opposite to the inner wall, scattered water or mud will not directly hit the free end of the seal lip. Also, even if used in an environment where the bearing is exposed to scattered water and mud, stable contact of the tip of the seal lip on the axially inner wall of the seal groove as the sliding contact surface is ensured, so that sufficient seal performance is obtained.

Before being fitted in the rolling bearing, the free end of the seal lip of each of the contact seals preferably has an inner diameter that is smaller than the diameter of the radially outer edge of the axially outer wall.

By restricting the surface roughness of the sliding contact surfaces to not more than 2.0 micrometers, preferably not more than 1.2 micrometers in terms of Rmax, it is possible to prevent an increase in torque loss caused by friction with the seal lips and suppress the wear of the seal lip, thereby stabilizing the seal lip pressing force.

By using hydrogenated nitrile rubber or ester-resistant acrylic rubber as the material for the elastic member forming the seal lips, the seal lips can reliably keep its heat resistance even when used in a hot environment of 150 degrees C or higher like rolling bearings used in electromagnetic clutches. Also, even if smeared with oil, the seal lips will stably exhibit its function.

Hydrogenated nitrile rubber differs from ordinary nitrile rubber in that hydrogen is added to the unsaturated bond by hydrogenation. It has high heat resistance of 150 degrees C or over and superior chemical resistance. Even if smeared with oil such as compressor oil for air-conditioners, it can maintain stable performance. Also, ester-resistant acrylic rubber has higher chemical resistance than acrylic rubber while maintaining high heat resistance inherent to acrylic rubber. It has high heat resistance of 150 degrees C or and high chemical resistance.

### BRIEF DESCRIPTION OF THE DRAWINGS

Other features and objects of the present invention will become apparent from the following description made with reference to the accompanying drawings, in which:
Fig. 1 is a vertical sectional view of a sealed rolling bearing of an embodiment according to the present invention;
Fig. 2 is a sectional view of the same before contact seals are mounted in the bearing;
Fig. 3 is a partial enlarged sectional view of Fig. 1;
Fig. 4 is a graph showing the results of a foreign matter penetration test conducted on Examples 1;
Fig. 5 is a vertical sectional view of a second embodiment;
Fig. 6 is a partial enlarged sectional view of Fig. 5;
Fig. 7A is a partially omitted vertical sectional view of a third embodiment;
Fig. 7B is a partial enlarged sectional view of Fig. 7A;
Fig. 8A is a vertical sectional view showing how the seal lip pressing force P is measured;
Fig. 8B is a partial enlarged sectional view of Fig. 8A;
Fig. 9 is a graph showing the results of a muddy water resistance test conducted on Examples 3;
Fig. 10 is a vertical sectional view of a fourth embodiment;
Fig. 11 is a partial enlarged sectional view of Fig. 10;
Fig. 12 shows the manufacturing steps for the inner ring of the sealed rolling bearing of the fourth embodiment;
Fig. 13A is a graph showing the surface roughness of the sliding contact surfaces of Examples 4 of the invention;
Fig. 13B is a graph showing the surface roughness of the sliding contact surfaces of Comparative Examples 4;
Fig. 14 shows the manufacturing steps for the inner ring of the sealed rolling bearing of the fifth embodiment;
Fig. 15A is a graph showing the surface roughness of the sliding contact surfaces of Examples 5;
Fig. 15B is a view showing the surface roughness of the sliding contact surfaces of a variant of Examples 5; and
Fig. 16 shows the manufacturing steps for conventional bearing rings.

### DETAILED DESCRIPTION OF THE PREFERRED EMBODIMENTS

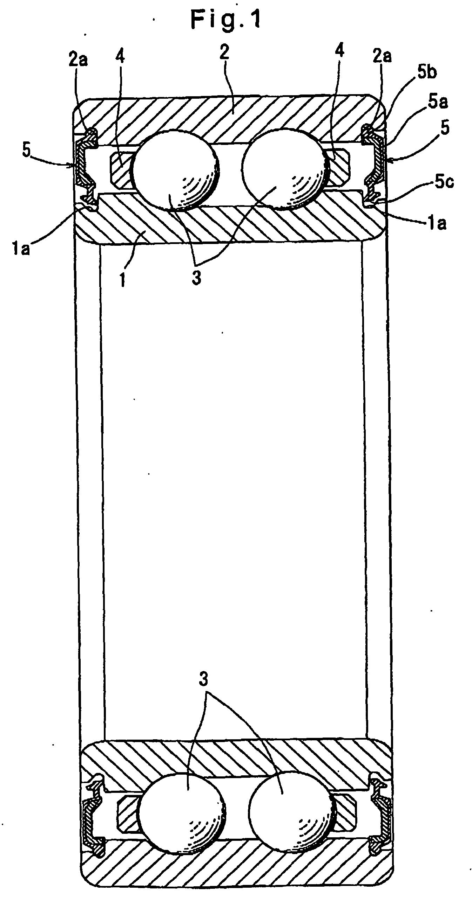

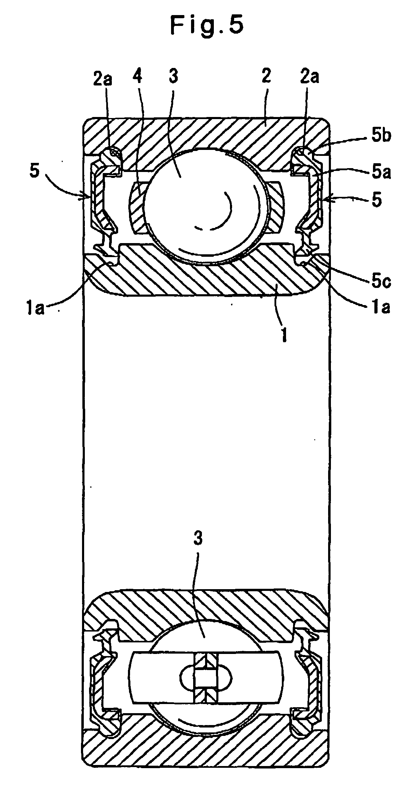

With reference to the accompanying drawings, an embodiment of the present invention is now described. One points out expressly that the second embodiment to the fifth embodiment described with reference to Figures 5 to 14 do not fall under the scope of the appended claims. Said embodiments help to understand the present invention. Figs. 1 to 4 show the sealed rolling bearing according to the embodiment of the present invention. As shown in Fig. 1, this sealed rolling bearing is a double-row angular ball bearing which comprises an inner ring 1, an outer ring 2, balls 3 retained by a retainer 4 in two rows in a bearing space defined between the inner and outer rings 1 and 2, and contact seals 5 fixed in grooves 2a formed in the inner periphery of the outer ring 2 to seal the bearing space.

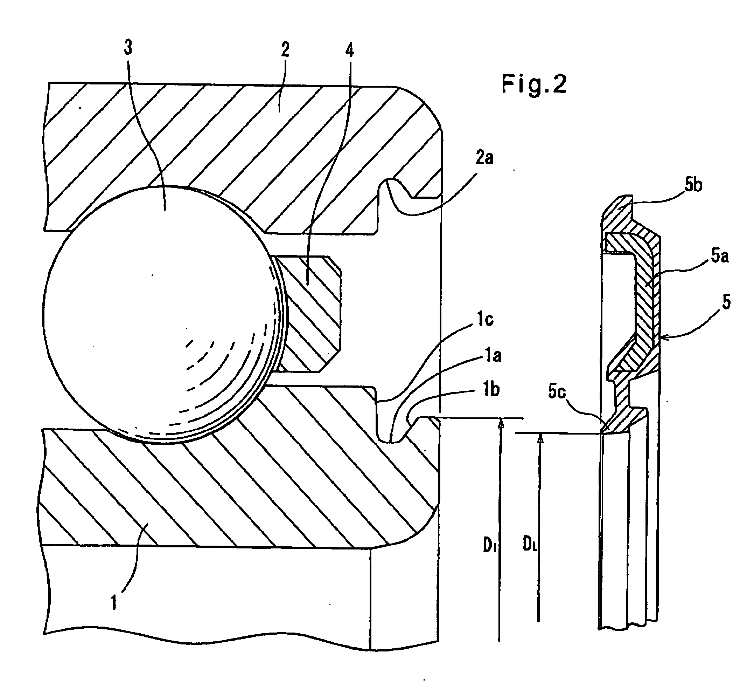

As shown in Fig. 2, each contact seal 5 comprises a metallic core 5a and an elastic member 5b having an axially inwardly extending seal lip 5c on its inner periphery. Before being mounted on the bearing, the seal lip 5c has, at its axially inner free end, an inner diameter D_{L} that is smaller than the maximum diameter D_{I} of an axially outer wall 1b of a seal groove 1a formed in the outer periphery of the inner ring 1. The difference between D_{L} and D_{I} is set to be no more than 0.2 mm so that the contact seals 5 can be easily mounted on the bearing. The elastic member 5b of each contact seal 5 is made of hydrogenated nitrile rubber or ester-resistant acrylic rubber in this embodiment and any of the following embodiments.

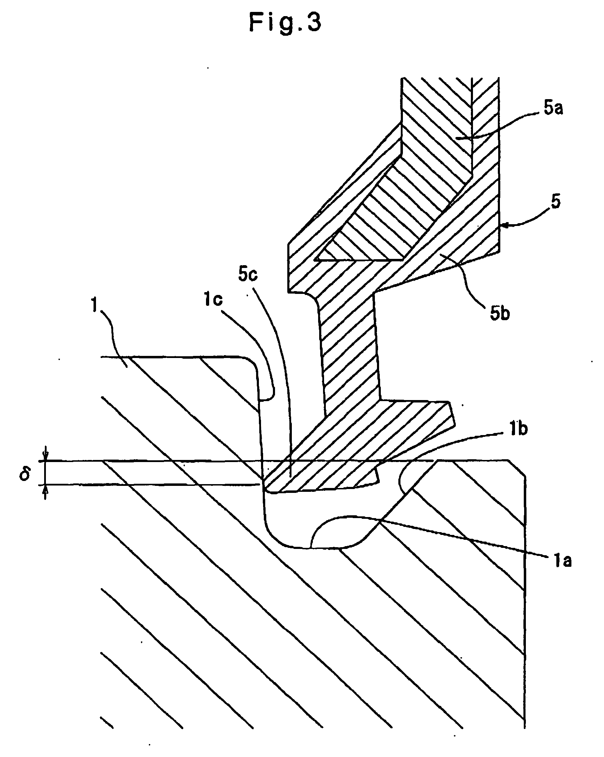

When each contact seal 5 is mounted on the bearing with its radially outer end received in the groove 2a of the outer ring 2, as shown in Fig. 3, the free end of its seal lip 5c is brought into sliding contact with an axially inner wall 1c of the seal groove 1a of the inner ring 1 along a line that is radially inwardly spaced apart by a distance δ being 0.05 to 0.1 mm according to the invention from the radially outer edge of the axially outer wall 1b of the groove 1a. Therefore, even if the bearing is used in an environment where the bearing is exposed to water and mud, such water and mud will never directly hit the free end of the seal lip 5c. The free end of the seal lip 5c is thus stably kept in sliding contact with the inner wall 1c of the seal groove 1a.

### [Examples 1]

Double-row angular ball bearings of the above-described type were mounted on a rotary tester in an environment where the bearings were intermittently hit by flying foreign matter such as water and mud to determine the amount of foreign matter that penetrates into the bearing space while changing the radial distance δ of the contact point between the seal lip 5c and the inner wall 1c of the seal groove 1a from the radially outer edge of the axially outer wall 1b. Specifically, the contact point between the seal lip 5c and the inner wall 1c was radially inwardly spaced apart by 0.1 mm and 0.05 mm (Examples of the invention), and radially outwardly spaced apart by 0.0 mm, 0.05 mm and 0.1 mm (Comparative Examples), from the radially outer edge of the axially outer wall 1b. The amount of foreign matter that had penetrated into the bearing space was determined from the difference W in the mass of the bearing before and after the test. The test was conducted under the following conditions:

| | |
|---|---|
| Rotating speed: | 2000 rpm |
| Testing time: | 3 hours |

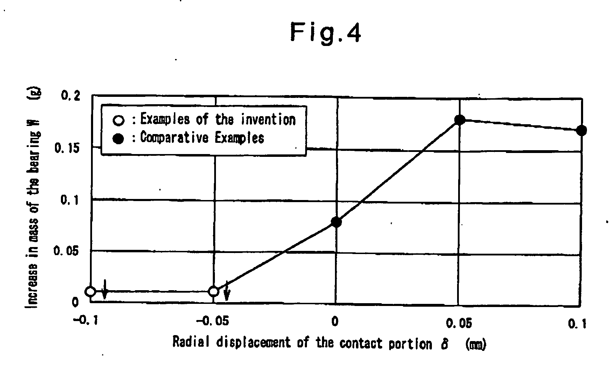

Fig. 4 shows the test results. As is apparent from the graph of Fig. 4, in Comparative Examples, in which the above contact point was radially outwardly spaced apart by radial distance δ, or not radially spaced apart at all, from the radially outer edge of the axially outer wall 1b, the increase W in the mass of the bearing was remarkable. In Examples of the invention, in which the above contact point was radially inwardly spaced apart by radial distance δ from the radially outer edge of the axially outer wall 1b, the increase W was low. This means that foreign matter scarcely penetrated into the bearing space. Thus, it was confirmed that by adjusting the radial distance δ radially inwardly from the radially outer edge of the axially outer wall 1b, it is possible to ensure stable contact of the tip of the seal lip 5c with the axially inner wall 1c of the seal groove 1a, thereby preventing entry of foreign matter.

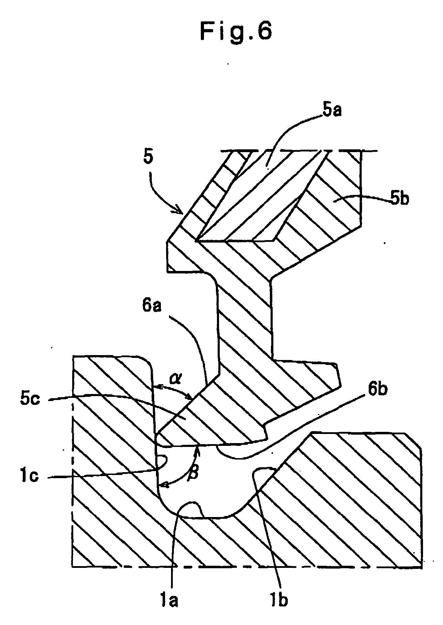

Figs. 5 and 6 show the second embodiment. As shown in Fig. 5, this sealed rolling bearing is a deep groove ball bearing which includes an inner ring 1, an outer ring 2, balls 3 retained in a single row by a retainer 4 in a bearing space defined between the inner and outer rings 1 and 2, and contact seals 5 fixed in grooves 2a formed in the inner periphery of the outer ring 2 to seal the bearing space.

As shown in Fig. 6, each contact seal 5 comprises a metallic core 5a and an elastic member 5b having an axially inwardly extending seal lip 5c formed at its inner periphery. The seal lip 5c has a radially outer inclined surface 6a sloping radially outwardly from its tip, which is kept in sliding contact with the axially inner wall 1c of the seal groove la, and a radially inner inclined surface 6b sloping radially outwardly from its tip. The angle α of the inclined surface 6a to the inner wall 1c is set to 13 to 44 degrees. The angle β of the inclined surface 6b to the inner wall 1c is set to 91 to 100 degrees.

### [Examples 2]

Sealed deep groove ball bearings of the above-described type having different combinations of the angles α and β were mounted on a rotary tester in an environment in which the bearings were splashed with muddy water to check how muddy water infiltrated into the bearing space. The test was conducted under the following conditions:
Muddy water: Loamy powder of the Kanto district, JIS type 8 (Mud concentration: 10 mass %)
Rotating speed: 2000 rpm
Testing time: 3 hours

**Table 1**

| | Inclination angle α | Inclination angle β | Inclination angles γ | Muddy water resistance |
|---|---|---|---|---|
| Example A | 13° | 92° | 5° | ○ |
| Example B | 43° | 93° | 6° | ○ |
| Example C | 44° | 91° | 6° | ○ |
| Comparative Example A | 43° | 11° | - 76° | × |
| Comparative Example B | 49° | 86° | 6° | × |
| Comparative Example C | 54° | 81° | 66° | × |
| Comparative Example D | 12° | 81° | 6° | × |

| | | | | |
|---|---|---|---|---|
| Muddy water resistance ○: Good × : Poor | | | | |

Table 1 shows the test results. In Table 1, the angle γ of the radially inner inclined surface to the bottom of the seal groove, too, is indicated as a reference value. The angle γ is specified to 0 to 30 degrees in Patent publication 4. In any of Examples A, B and C of the invention, in which the angle α was 13 to 44 degrees and the angle B was 91 to 100 degrees, no infiltration of muddy water into the bearing space was observed. Thus, they showed high resistance to muddy water. But in Comparative Examples A, B, C and D, in which one or both of the angles α and β were not within the above ranges, large amounts of muddy water penetrated into the bearing space. Thus, resistance to muddy water was inferior. Although Comparative Example D meets the ranges for the angles α and γ specified in Patent publication 4, the resistance to muddy water was poor.

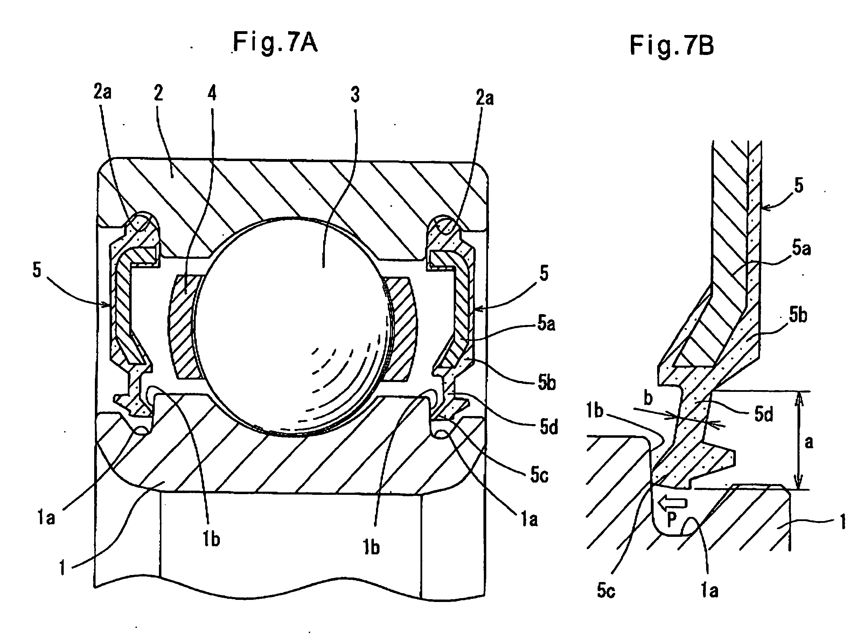

Figs. 7 to 9 show the third embodiment. As shown in Fig. 7A, this sealed rolling bearing, too, is a deep groove ball bearing including an inner ring 1, an outer ring 2, balls 3 retained by a retainer 4 in a bearing space defined between the inner and outer rings 1 and 2, and contact seals 5 fixed in grooves 2a formed in the inner periphery of the outer ring 2 to seal the bearing space.

As shown in Fig. 7B, the contact seal 5 comprises a metallic core 5a and an elastic member 5b. The elastic member 5b has a neck portion 5d extending beyond the metallic core 5a and a seal lip 5c at its tip. The seal lip 5c is pressed axially against an axially inner wall 1c of a seal groove 1a formed in the outer periphery of the inner ring 1, with a force P not less than 1.6 N. The surface roughness Rmax of the axially inner wall 1c of the seal groove 1a as the sliding contact surface is set to not more than 1.2 micrometers.

### [Examples 3]

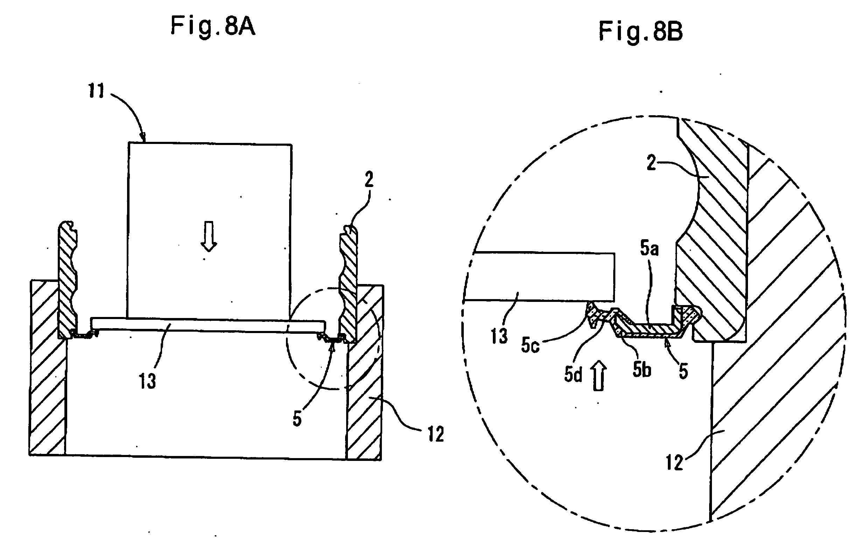

As Examples, sealed deep groove ball bearings of the type shown in Figs. 7A, and 7B were prepared in which the seal lip pressing force P was set to not less than 1.6N. As Comparative Examples, similar sealed deep groove ball bearings were prepared in which the ratio of the pressing force P to the axial interference L was 4.8 to 8.8 N/mm and the pressing force was not more than 1.6 N. The seal lip pressing force P was determined by horizontally mounting the outer ring 2 on a rack 12 of a compression tester 11 with one of the contact seals 5 fitted on the outer ring 2 (see Fig. 8A), and measuring the load when the seal lip 5c of the contact seal 5 was pressed by a pressing head 13 until the seal lip 5c was displaced by a distance corresponding to a predetermined axial interference. In both Examples and Comparative Examples, the ratio of the total radial length a (see Fig. 7B) of the neck portion 5d and the seal lip 5c of each contact seal 5 to the axial thickness b of the neck portion 5d, which corresponds to the ratio of the radial length A to the axial thickness B, of the seal lips specified in Patent publication 3, was 3.2. The surface roughness Rmax of the sliding contact surface was not more than 1.2 micrometers.

For Examples 3, a muddy water resistance test was conducted in the same manner as for Examples 2 to measure the amount of foreign matter penetrated into the bearing space from the increase W in the mass of the bearing after the test. The test was conducted under the same conditions as in Examples 2.

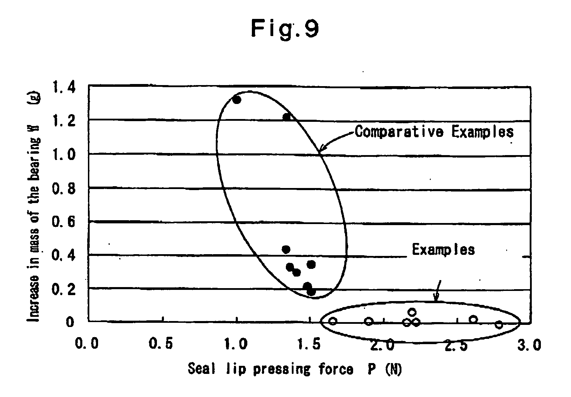

Fig. 9 shows the results of the test. For Examples, in which the seal lip pressing force P was not less than 1.6 N, although the ratio a/b, which corresponds to the ratio A/B (A: radial length of the seal lip; B: its axial thickness), was not within the range specified in Patent publication 3, the increase W in the mass of the bearing was not remarkable. This means that the Examples have excellent seal performance. In contrast, for Comparative Examples, in which the pressing force P was less than 1.6 N, although the ratio of the seal lip pressing force P to the axial interference L was within the range specified in Patent publication 4, the increase in the mass of the bearing was remarkable. This means that no sufficient seal performance is obtained.

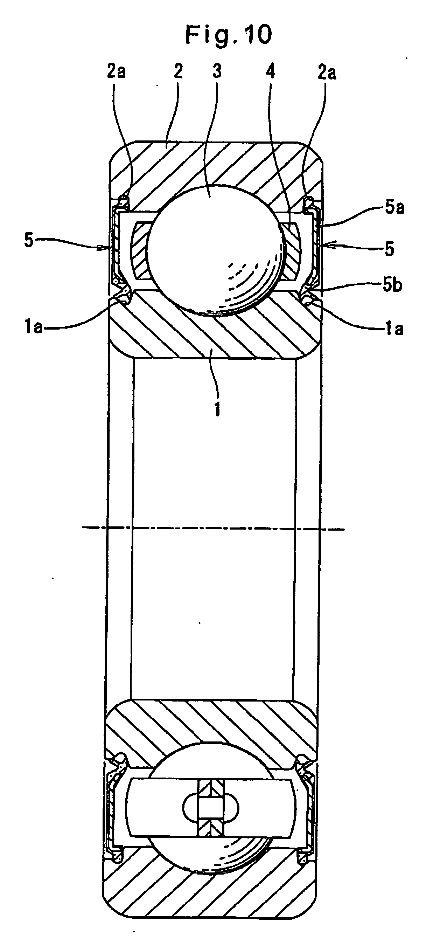

Figs. 10 to 13 show the fourth embodiment. As shown in Fig. 10, this sealed rolling bearing, too, is a deep groove ball bearing comprising an inner ring 1, an outer ring 2, balls 3 retained by a retainer 4 in a bearing space defined between the inner and outer rings 1 and 2, and contact seals 5 fixed in grooves 2a formed in the inner periphery of the outer ring 2 to seal the bearing space.

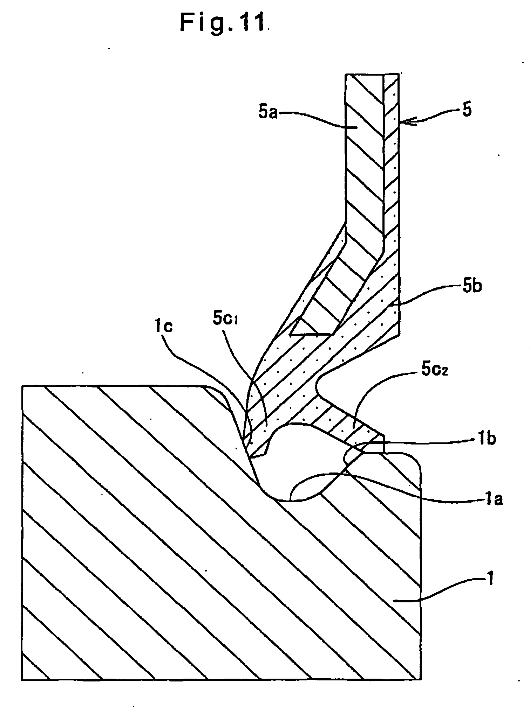

As shown in Fig. 11, each contact seal 5 has two seal lips 5c₁ and 5c₂ at its radially inner end. The axially inner seal lip 5c₁ is kept in sliding contact with an axially inner wall. 1c of a seal groove 1a formed in the outer periphery of the inner ring 1. The axially outer seal lip 5c₂ is in sliding contact with the radially outer edge of an axially outer wall 1b of the seal groove 1a.

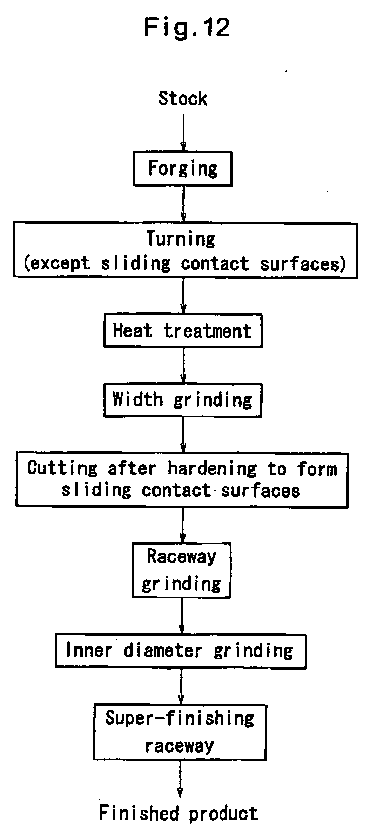

The inner ring 1, which is formed with the two seal grooves la, each having two sliding contact surfaces, is made as shown in Fig. 12. First, a major portion of the inner ring except its portions where the seal grooves 1a are to be formed is formed by forging and turning the stock for the inner ring, and the stock is subjected to heat treatment including hardening and width grinding. Then, the seal grooves 1a are formed by cutting. The subsequent steps are the same as conventional steps (shown in Fig. 16) for manufacturing bearing rings. Specifically, a raceway is formed by grinding, the inner periphery is ground, and the raceway is super-finished.

### [Examples 4]

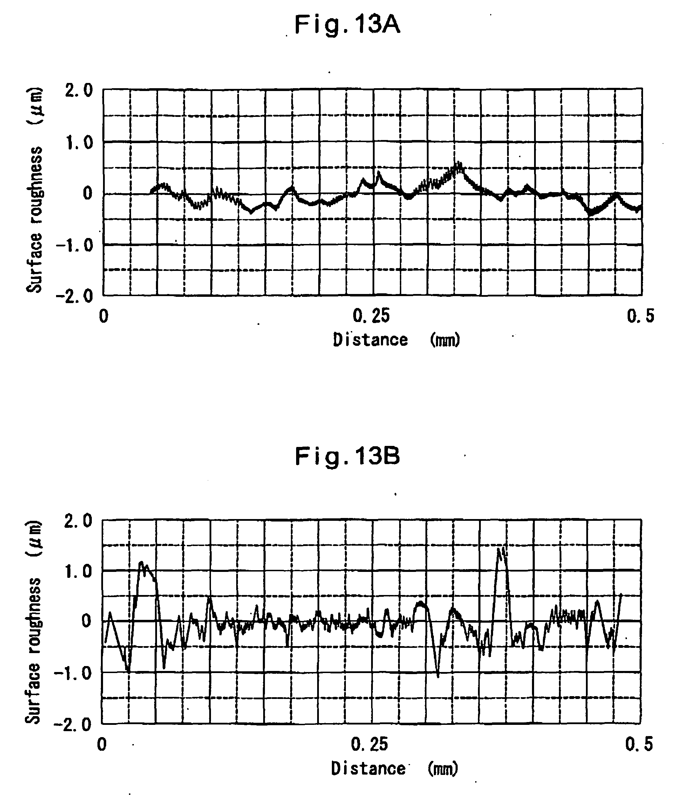

Fig. 13A shows the surface roughness of the sliding contact surfaces formed by cutting after hardening (Examples). Fig. 13B shows the surface roughness of the sliding contact surfaces not subjected to descaling treatment after heat treatment as in the prior art (Comparative Examples). As is apparent from these graphs, the surface roughness of the sliding contact surfaces is 2.60 micrometers in terms of Rmax for Comparative Examples, whereas the surface roughness of the sliding contact surfaces is 1.03 micrometers in terms of Rmax for the Examples, which are formed by cutting after hardening.

For the sealed deep groove rolling bearings using the inner rings of the Examples and Comparative Examples, a foreign matter penetration test was conducted in the same manner as for Examples 1. The test conditions were the same as for the Examples 1.

The test results show that the increase in mass W was 0.46 g for Comparative Examples, whereas the increase in mass W was 0.02 g for Examples of the invention. This means that for the Examples, sealing performance was so high that foreign matter scarcely penetrated into the bearing space.

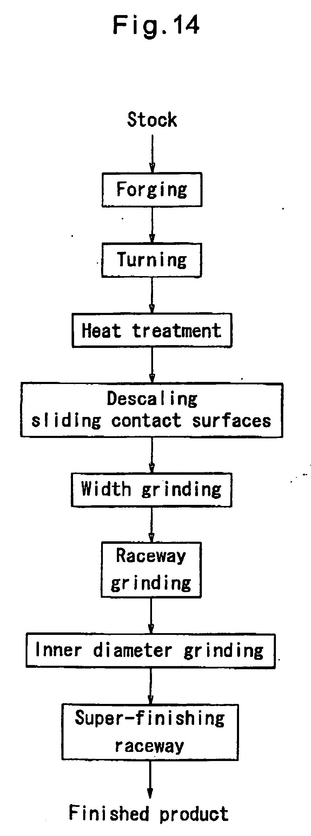

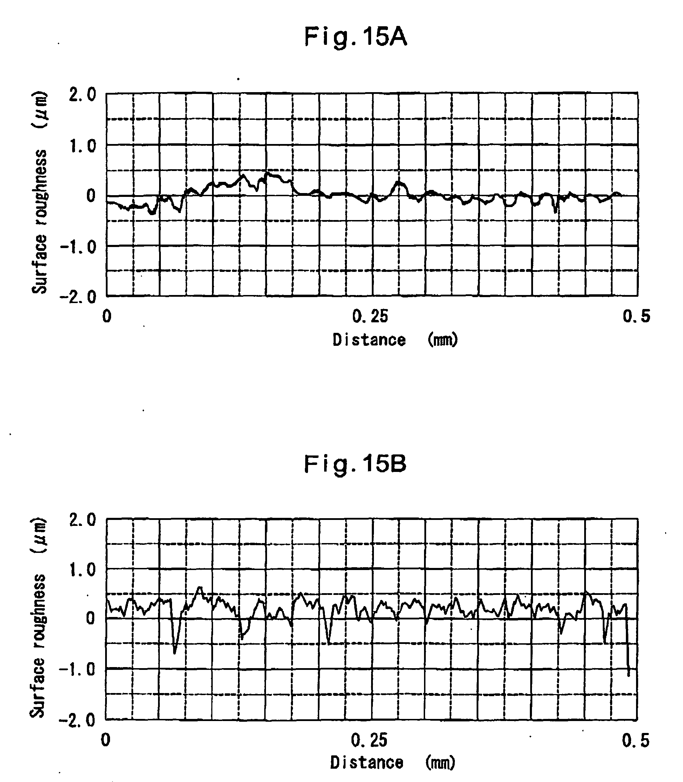

Figs. 14 and 15 show the fifth embodiment. Though not shown, the fifth embodiment, too, is a deep groove ball bearing of the same type as the fourth embodiment. Its inner ring is manufactured as shown in Fig. 14. Specifically, the stock for the inner ring 1 is formed by forging and turning and subjected to heat treatment such as hardening. Then, the sliding contact surface formed on the axially inner wall 1c of each seal groove 1a and the sliding contact surface on the radially outer edge of the axially outer wall 1b are subjected to descaling treatment to remove scales formed during heat treatment. The subsequent steps are the same as the conventional manufacturing steps for bearing rings shown in Fig. 16.

### [Example 5]

Fig. 15A is a graph showing the surface roughness of the sliding contact surfaces subjected to shot blasting as descaling treatment (Examples). The graph shows that the Examples, which were subjected to shot blasting, have very smooth sliding contact surfaces with the surface roughness of 0.79 micrometers in terms of Rmax in comparison with, as shown in Fig. 13B, the surface roughness of the sliding contact surfaces of Comparative Examples, which were not subjected to descaling treatment after heat treatment, that is, 2.60 micrometers in terms of Rmax.

For the sealed deep groove rolling bearings of Examples 5, a foreign matter penetration test was conducted in the same manner as for Examples 4. As a result, Comparative Example showed an increase in mass W of 0.46 g, whereas the Examples showed an increase in mass W of 0.02 g. This means that for the Examples , sealing performance was so high that foreign matter scarcely penetrated into the bearing space.

Fig. 15B is a graph showing the surface roughness of the sliding contact surfaces of another Example , which was subjected to barrel grinding as descaling treatment. For this Example, the surface roughness of the sliding contact surfaces was 1.30 micrometers in terms of Rmax, which is less than 2.0 micrometers as in Example shown in Fig. 15A.

Although the sealed rolling bearing in any of the above embodiments is a double-row angular ball bearing or a deep groove ball bearing with the contact seals fixed to the outer ring, the present invention is applicable to other ball bearings and other types of rolling bearings such as roller bearings. Also, in the third to fifth embodiments, the contact seals may be fixed to the inner ring.

## Claims

1. A sealed rolling bearing comprising an inner ring (1) formed with two seal grooves (1a) in a radially outer periphery thereof, each of said two seal grooves (1a) having an axially inner wall (1c) and an axially outer wall (1b), an outer ring (2), a plurality of rolling elements (3) disposed in a bearing space defined between said inner and outer rings (1 and 2), and contact seals (5) fixed to said outer ring (2) and each having a seal lip (5c) made of an elastic material and having a free end thereof kept in sliding contact with said axially inner wall (1c) of one of said seal grooves (1a), thereby sealing said bearing space, **characterised in that** said seal lip (5c) of each of said contact seals (5) has said free end thereof kept in sliding contact with said axially inner wall (1c) along a line that is located radially inwardly of a radially outer edge of said axially outer wall (1b) by 0.05 to 0.1 mm.

2. The sealed rolling bearing of claim 1 wherein before being fitted in the rolling bearing, said free end of said seal lip (5c) of each of said contact seals (5) has an inner diameter that is smaller than the diameter of said radially outer edge of said axially outer wall (1b).

## Patentansprüche

1. Abgedichtetes Wälzlager, das einen inneren Ring (1) umfasst, der mit zwei Dichtungsnuten (1a) in seinem radialen Außenumfang versehen ist, wobei jede der zwei Dichtungsnuten (1a) eine axial innenliegende Wand (1 c) und eine axial außenliegende Wand (1 b) aufweist, einen äußeren Ring (2), eine Vielzahl von Wälzelementen (3), die in einem Lagerungsraum angeordnet sind, der zwischen dem inneren und dem äußeren Ring (1 und 2) ausgebildet ist, und Kontaktdichtungen (5) umfasst, die an dem äußeren Ring (2) befestigt sind und jeweils eine Dichtlippe (5c) aufweisen, die aus einem elastischen Material besteht und ein freies Ende hat, das in Gleitkontakt mit der axial innenliegenden Wand (1c) einer der Dichtungsnuten (1a) gehalten wird, um so den Lagerungsraum abzudichten, **dadurch gekennzeichnet, dass** das freie Ende der Dichtlippe (5c) jeder der Kontaktdichtungen (5) entlang einer Linie, die um 0,05 bis 0,1 mm radial innerhalb eines radial außenliegenden Randes der axial außenliegenden Wand (1 b) liegt, in Gleitkontakt mit der axial innenliegenden Wand (1 c) gehalten wird.

2. Abgedichtetes Wälzlager nach Anspruch 1, wobei das freie Ende der Dichtlippe (5c) jeder der Kontaktdichtungen (5) vor dem Einsetzen in das Wälzlager einen Innendurchmesser hat, der kleiner ist als der Durchmesser des radial außenliegenden Randes der axial außenliegenden Wand (1 b).

## Revendications

1. Palier de roulement avec une garniture d'étanchéité, comprenant une bague intérieure (1) présentant deux rainures d'étanchéité (1a) dans sa périphérie radialement extérieure, chacune desdites deux rainures d'étanchéité (1a) ayant une paroi axialement intérieure (1c) et une paroi axialement extérieure (1b), une bague extérieure (2), plusieurs éléments de roulement (3) disposés dans un espace de palier défini entre lesdites bagues intérieure et extérieure (1 et 2), et des joints de contact (5) fixés à ladite bague extérieure (2), et ayant chacune une lèvre d'étanchéité (5c) réalisée en matériau élastique et dont une extrémité libre est maintenue en contact de coulissement avec ladite paroi axialement intérieure (1c) d'une desdites rainures d'étanchéité (1a), en rendant ainsi étanche ledit espace de palier, **caractérisé en ce que** ladite lèvre d'étanchéité (5c) de chacun desdits joints de contact (5) a son extrémité libre maintenue en contact de coulissement avec ladite paroi axialement intérieure (1c) le long d'une ligne qui se situe radialement vers l'intérieur d'un bord radialement extérieur de ladite paroi axialement extérieure (1b) selon 0,05 à 0,1 mm.

2. Palier de roulement avec garniture d'étanchéité selon la revendication 1, dans lequel, avant qu'elle ne soit ajustée dans le palier de roulement, ladite extrémité libre de ladite lèvre d'étanchéité (5c) de chacun desdits joints de contact (5) a un diamètre intérieur qui est plus petit que le diamètre dudit bord radialement extérieur de ladite paroi axialement extérieure (1b).
